(19) **Europäisches Patentamt / European Patent Office / Office européen des brevets**

(11) **EP 3 718 765 A1**

(12) **EUROPEAN PATENT APPLICATION**
published in accordance with Art. 153(4) EPC

(43) Date of publication:
07.10.2020 Bulletin 2020/41

(21) Application number: 18884699.2

(22) Date of filing: 27.11.2018

(51) Int Cl.:
*B32B 5/28* (2006.01)     *B29C 43/20* (2006.01)
*B29C 43/34* (2006.01)    *C08J 5/04* (2006.01)
*C08K 7/06* (2006.01)     *C08L 79/08* (2006.01)

(86) International application number:
PCT/JP2018/043570

(87) International publication number:
WO 2019/107352 (06.06.2019 Gazette 2019/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.11.2017 JP 2017227435

(71) Applicant: Toyo Seikan Group Holdings, Ltd.
Shinagawa-ku
Tokyo 141-8627 (JP)

(72) Inventors:
• SEGAMI, Kouta
Yokohama-shi
Kanagawa 240-0062 (JP)
• WATANABE, Kazunobu
Yokohama-shi
Kanagawa 240-0062 (JP)
• ENOKIDO, Toshinori
Yokohama-shi
Kanagawa 240-0062 (JP)
• KOBAYASHI, Yusuke
Yokohama-shi
Kanagawa 240-0062 (JP)

(74) Representative: J A Kemp LLP
14 South Square
Gray's Inn
London WC1R 5JJ (GB)

(54) **FIBER-REINFORCED LAMINATED BODY AND METHOD FOR MANUFACTURING SAME**

(57) The present invention relates to a fiber-reinforced laminate including at least a layer of woven fibers and a layer of short fiber-containing resin composition, where the short fiber-containing resin composition is present in gaps formed by crossing fiber bundles composing the woven fibers, thereby imparting excellent slidability and further both wear resistance and strength.

**Fig. 2**

# EP 3 718 765 A1

**Description**

Technical Field:

The present invention relates to a fiber-reinforced laminate and a method for producing the same. More specifically, the present invention relates to a fiber-reinforced laminate that has excellent slidability and has further both wear resistance and strength, and a method for producing the same.

Background Art:

Articles formed of a fiber-reinforced resin prepared by blending in a resin a functional fiber such as a carbon fiber are excellent in properties such as weather resistance, mechanical strength and durability, and thus, the articles have been widely used for transportation equipment such as automobiles and aircraft, civil engineering and construction materials, sporting goods, and the like.

For instance, Patent document 1 below describes a carbon fiber-reinforced resin article comprising a specific pitch-based carbon short fiber mixture and a matrix resin. Patent document 1 describes further that the article is suitably used for various electronic components.

Further, Patent document 2 below proposes a friction material composed of a resin composition for friction material containing a specific aromatic polyimide oligomer as a binder for carbon fibers or the like. In a conventional technique, a phenol resin is used preferably as the binder for the friction material. According to the Patent document 2, the binder of the aromatic polyimide oligomer is excellent in heat resistance and mechanical properties in comparison with the conventional binder, and its formability is favorable.

The fiber-reinforced resin article to be used as a sliding member like a bearing is required to have various properties. For instance, the article is required to have favorable strength and mechanical strength like rigidity. Furthermore, its dynamic friction coefficient is required to be low and its wear amount is required to be small, and its limit PV value is required to be high. The article is also required to contain, as the matrix resin, an addition-reaction type polyimide resin excellent in mechanical strength, heat resistance and durability and further excellent in the resin impregnation property.

Patent document 3 relates to an invention by the present inventors. This document proposes a fiber-reinforced polyimide resin article prepared by kneading a prepolymer of an addition-reaction type polyimide resin and functional fibers at a temperature not lower than the melting point and not higher than the heat-curing onset temperature of the addition-reaction type polyimide resin, and shaping the thus obtained mixture at a temperature not lower than the heat-curing onset temperature of the addition-reaction type polyimide resin.

Prior Art Documents:

Patent Documents:

[Patent document 1] JP 4538502 B2
[Patent document 2] JP 2009-242656 A
[Patent document 3] JP 2016-60914 A

Summary of the Invention:

Problems to be solved by the invention:

The fiber-reinforced polyimide resin article described in Patent Document 3 has excellent shape stability since it has substantially no warping. However, the article has difficulty in achieving both wear resistance and strength.

That is, when the fiber-reinforced polyimide resin article is used as a sliding member, an abrasion powder scraped due to the friction on the sliding surface may transfer to the surface of the mating material so as to form a transfer film, thereby improving the wear resistance. However, since a fiber-reinforced polyimide resin article capable of forming such a transfer film contain relatively short carbon fibers or the like for the purpose of efficiently generating the abrasion powder, the strength is unsatisfactory, and thus, the article cannot be used as a sliding member to be applied with impact or large load.

Accordingly, it is an object of the present invention to provide a fiber-reinforced laminate having excellent slidability and having both wear resistance and strength, and a method for producing the same.

Means for solving the problems:

The present invention provides a laminate including at least a layer of woven fibers and a layer of short fiber-containing resin composition, wherein the short fiber-containing resin composition is present in gaps formed by the fiber bundles that cross each other to constitute the woven fibers.

It is preferable in the laminate of the present invention that:

1. the short fibers have a length shorter than the length of one side of the gaps;
2. the length of the short fibers is in the range of 1 to 350 $\mu$m;
3. the short fiber-containing resin composition includes an addition-reaction type polyimide resin in which the short fibers are dispersed;
4. the woven fibers and the short fibers include carbon fibers; and
5. the layer of short fiber-containing resin composition and the layer of woven fibers are alternately laminated.

The present invention provides also a method for producing the aforementioned laminate. In the method, after supplying a short fiber-containing resin composition to a die, a step of placing woven fibers on the short fiber-containing resin composition and a step of supplying the short fiber-containing resin composition on the woven fibers are repeated at least once, and then, compression is conducted.

In the method for producing a laminate of the present invention, it is preferable that the short fiber-containing resin composition is a resin composition formed by dispersing short fibers in an addition-reaction type polyimide resin, and compression is conducted at a temperature not lower than the heat-curing temperature of the addition-reaction type polyimide resin.

Effects of the invention:

In the fiber-reinforced laminate of the present invention, layers of woven fibers having excellent strength and layers of short fiber-containing resin composition having excellent wear resistance are alternately laminated. Moreover, since the short fiber-containing resin composition is present in the gaps formed by the crossing fiber bundles in the woven fibers, excellent wear resistance and strength can be maintained over a long period of time.

In addition, since the matrix resin is an addition-reaction type polyimide resin employed as the short fiber-containing resin composition, not only the strength but the heat resistance can be improved.

Since the fiber-reinforced laminate of the present invention comprises the layer of short fiber-containing resin composition present on the surface of the laminate, it is possible to form a transfer film on a mating material, thereby remarkably improving the wear resistance. Even when the woven fibers are disposed on the laminate surface or when the layer of short fiber-containing resin composition on the surface is worn out after the start of use so that the woven fibers are exposed, the transfer film can be formed on the mating material because the composition present in the gaps among the woven fibers is exposed on the surface. As a result, the wear resistance can be improved over a long period of time.

Further, according to the method for producing a fiber-reinforced laminate of the present invention, it is possible to efficiently make the short fiber-containing resin composition present in the gaps among the woven fibers, and it is possible to produce a laminate having the above-mentioned excellent wear resistance and strength with high productivity.

Brief Description of the Drawings:

[Fig. 1]: a perspective view schematically showing an example of a fiber-reinforced laminate of the present invention;
[Fig. 2] : a perspective view showing the laminate of Fig. 1 in a state where its uppermost layer is eliminated;
[Fig. 3] : a view schematically showing woven fibers used in the laminate of Fig. 1, including Fig. 3(A) as a plan view and Fig. 3(B) as a partial enlarged view of Fig. 3(A); and
[Fig. 4] : a perspective view showing a method for a sliding wear test.

Mode for Carrying Out the Invention:

(Laminate)

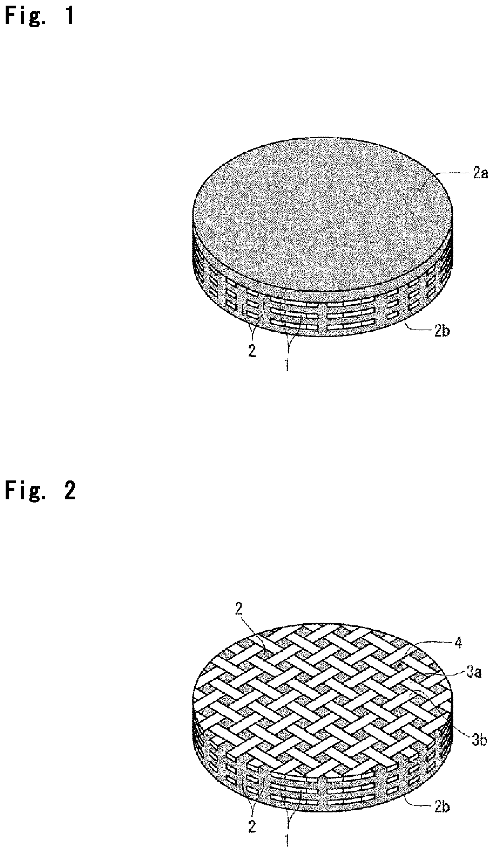

As schematically shown in Fig. 1, a laminate of the present invention is a disc-shaped laminate formed by alternately laminating a layer 1 of woven fibers and a layer 2 of short fiber-containing resin composition, where an uppermost layer 2a and a lowermost layer 2b comprise the layer 2 of short fiber-containing resin composition.

Fig. 2 is a perspective view schematically showing a laminate from which the uppermost layer 2a of short fiber-containing resin composition is eliminated. The short fiber-containing resin composition enters gaps 4 that are formed by crossing fiber bundles 3a and 3b of the layer 1 of woven fibers exposed on the surface of the laminate, so that the gaps are filled with the short fiber-containing resin composition. Therefore, even when the woven fibers are present on the outermost surface of the laminate of the present invention, the short fiber-containing resin composition present in the gaps 4 may be scraped partly during abrasion and transferred to the mating material. This imparts excellent wear resistance to the laminate.

Further, as shown in Fig. 1, the alternate lamination of the layer 1 of woven fibers and the layer 2 of short fiber-containing resin composition can provide a laminate excellent in strength and wear resistance.

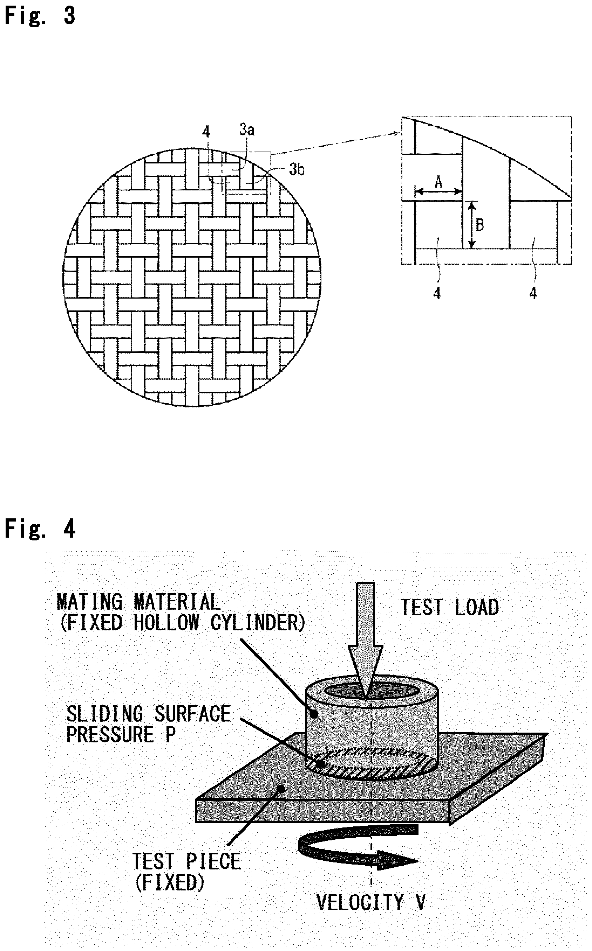

Fig. 3 is a schematic view showing woven fibers used in the laminate shown in Fig. 1. Fig. 3 includes an enlarged view showing the fiber bundles and the gaps. Here, (A) and (B) indicate respectively the maximal width and the maximal height of each gap 4 formed by the crossing fiber bundles 3a and 3b both constituting the woven fibers. It is preferable in the present invention that a fiber length L of the short fibers contained in the short fiber-containing resin composition satisfies $L < A$ and/or $L < B$. Thereby, it is possible to efficiently expose the short fibers to the surface of the layer of woven fibers through the gaps, and thus, the wear resistance may not be impaired even when the layer of short fiber-containing resin composition on the outermost surface is abraded.

The specific example shown in the drawing refers to a disc-shaped laminate. The present invention is not limited to this example, but it can have any conventionally known shapes such as a rectangular flat plate, and furthermore, a ring formed by concentrically laminating a layer of woven fibers and a layer of short fiber-containing resin composition.

(Woven fibers)

The woven fibers used in the present invention have gaps formed by crossing fiber bundles longitudinally and laterally. The specific size of the gaps may vary depending on the length of the short fiber. Both the maximal width (A) and the maximal height (B) of the gaps shown in Fig. 3 are preferably in the range of 200 to 1000 $\mu$m, and particularly preferably in the range of 250 to 500 $\mu$m. When the gap is smaller than the above range, the short fibers may not be sufficiently exposed to the surface through the gaps, and the wear resistance cannot be improved over a long period of time as compared with the case where the gap size is in the above range. On the other hand, when the mesh is coarse, the strength of the woven fibers is degraded, and the strength of the laminate cannot be sufficiently improved as compared with the case where the gap size is in the above range.

The width of the fiber bundles is preferably in the range of 800 to 1600 $\mu$m, the thickness is preferably in the range of 100 to 200 $\mu$m, and the maximal thickness of the woven fibers is preferably in the range of 200 to 400 $\mu$m.

For the fibers constituting the woven fibers, conventionally known functional fibers can be suitably used, and the examples include carbon fibers, aramid fibers, glass fibers, and metal fibers. Among them, carbon fibers can be used particularly preferably.

The carbon fibers are composed of continuous fibers having an average fiber diameter in the range of 5 to 18 $\mu$m. The fibers bundled to have a width of 1000 to 2000 $\mu$m and a thickness of 100 to 200 $\mu$m may be favorably used. When the average fiber diameter is less than the above range, the fiber bundles cannot be efficiently produced and they are less economical. When the average fiber diameter exceeds the above range, the handleability of the woven fibers may be degraded. The fibers may be PAN fibers or pitch-based fibers as long as the fibers are appropriately used depending on the purpose, but the PAN fibers are preferred because of the superior strength.

(Short fiber-containing resin composition)

The short fiber-containing resin composition used in the present invention is inherently capable of forming a sliding member. The aforementioned layer of woven fibers is sandwiched with the layers of short fiber-containing resin composition so that the layers are tightly adhered and fixed to each other and at the same time, the short fibers enters the gaps in the woven fibers. As a result, even when the outermost layer of short fiber-containing resin composition is abraded and the woven fibers are exposed, the excellent wear resistance can be maintained due to the short fibers present in the gaps of the woven fibers.

[Resin]

In the present invention, the resin used as a matrix to contain the short fibers can be a thermoplastic resin or a thermosetting resin having heat resistance and mechanical strength. These resins have been conventionally used for a sliding member or the like.

Examples of the thermoplastic resin include: polyesters such as polyethylene terephthalate, polybutylene terephthalate, polytrimethylene terephthalate, polyethylene naphthalate, liquid crystal polyester; polyolefins such as polypropylene; and syndiotactic polystyrene resin. The examples further include: polyoxymethylene, polyamide, polycarbonate, polyphenylene ether, polyphenylene sulfide, polyimide, polyamide imide, polyetherimide, polysulfone, polyethersulfone, polyketone, polyetherketone, polyetheretherketone, polyetherketoneketone, polyarylate, polyethernitrile, and polytetrafluoroethylene.

Examples of the thermosetting resin include unsaturated polyester resins, vinyl ester resins, epoxy resins, phenolic resins, urea-melamine resins, and polyimide resins.

Further examples include copolymers and modified materials thereof, and a resins as a blend of two or more kinds of resins, or a resin containing an elastomer or rubber component added to improve impact resistance.

Among these resins, an addition-reaction type polyimide resin is used particularly preferably in the present invention.

The addition-reaction type polyimide resin used in the present invention is formed of an aromatic polyimide oligomer having an addition-reaction group at the end thereof. This can be prepared by a conventionally known method. It can be obtained easily for instance, by using an aromatic tetracarboxylic dianhydride, an aromatic diamine and a compound having an anhydride group or an amino group with an addition-reaction group in the molecule such that the sum of the equivalents of the respective acid groups and the sum of the respective amino groups would be substantially equal. Preferably, the acid groups and the amino groups are reacted in a solvent. In a method, polymerization is conducted for 0.1 to 50 hours at a temperature not higher than 100°C, preferably not higher than 80°C so as to form an oligomer having an amino acid bond, and then, chemically imidized with an imidization agent. Another example refers to a method comprising two steps of heating at a high temperature in the range of about 140°C to about 270°C for thermal imidization. An alternative example refers to a method comprising a single step of polymerization-imidization reaction for 0.1 to 50 hours at a high temperature in the range of 140 to 270°C from the beginning.

Examples of the solvent that can be preferably used in these reactions include organic polar solvents such as N-methyl-2-pyrrolidone, N,N-dimethylformamide, N,N-dimethylacetamide, N,N-diethylacetamide, γ-butyl lactone, and N-methylcaprolactam, though the present invention is not limited to these examples.

In the present invention, the addition-reaction group at the end of the aromatic imide oligomer is not particularly limited as long as it is a group that performs a curing reaction (addition polymerization reaction) by heating in production of a laminate. When considering the ability to suitably perform a curing reaction and the favorable heat resistance of the obtained cured product, preferably it is any reaction group selected from the group consisting of a phenylethynyl group, an acetylene group, a nadic acid group, and a maleimide group. The phenylethynyl group is particularly preferred because it generates no gaseous component by the curing reaction and the obtained laminate is excellent in heat resistance and also in mechanical strength.

These addition-reaction groups are introduced into the ends of the aromatic imide oligomer by a reaction for a compound having an anhydride group or an amino group with the addition-reaction group in the molecule to form an imide ring, preferably with an amino group or an acid anhydride group at the end of the aromatic imide oligomer.

Examples of a compound having an anhydride group or an amino group together with an addition-reaction group in the molecule, which can be used preferably, include 4-(2-phenylethynyl)phthalic anhydride, 4-(2-phenylethynyl)aniline, 4-ethynyl-phthalic anhydride, 4-ethynylaniline, nadic anhydride, and maleic anhydride.

Examples of tetracarboxylic acid component forming the aromatic imide oligomer having the addition-reaction group at the end include at least one tetracarboxylic dianhydride selected from the group consisting of 2,3,3',4'-biphenyltetracarboxylic dianhydride, 2,2',3,3'-biphenyltetracarboxylic acid dianhydride, 3,3',4,4'-biphenyltetracarboxylic acid dianhydride, and 3,3',4,4'-benzophenone tetracarboxylic acid dianhydride. In particular, 2,3,3',4'-biphenyltetracarboxylic acid dianhydride can be suitably used.

Examples of the diamine component which forms an aromatic imide oligomer having an addition-reaction group at the end include: diamine having one benzene ring, such as 1,4-diaminobenzene, 1,3-diaminobenzene, 1,2-diaminobenzene, 2,6-diethyl-1,3-diaminobenzene, 4,6-diethyl-2-methyl-1,3-diaminobenzene, 3,5-diethyltoluene-2,4-diamine, and 3,5-diethyltoluene-2,6-diamine; diamine having two benzene rings, such as 4,4'-diaminodiphenyl ether, 3,4'-diaminodiphenyl ether, 3,3'-diaminodiphenyl ether, 3,3'-diaminobenzophenone, 4,4'-diaminobenzophenone, 4,4'-diaminodiphenylmethane, 3,3'-diaminodiphenylmethane, bis(2,6-ethyl-4-aminophenoxy)methane, bis(2-ethyl-6-methyl-4-aminophenyl)methane, 4,4'-methylene-bis(2,6-diethylaniline), 4,4'-methylene-bis(2-ethyl,6-methylaniline), 2,2-bis(3-aminophenyl)propane, 2,2-bis(4-aminophenyl)propane, benzizine, 2,2-bis(trifluoromethyl)benzizine, 3,3'-dimethylbenzidine, 2,2-bis(4-aminophenyl)propane, and 2,2-bis(3-aminophenyl)propane; diamine having three benzene rings, such as 1,3-bis(4-aminophenoxy)benzene, 1,3-bis(3-aminophenoxy)benzene, 1,4-bis(4-aminophenoxy)benzene, and 1,4-bis(3-aminophenoxy)benzene; and diamine having four benzene rings, such as 2,2-bis[4-[4-aminophenoxy]phenyl]propane, and 2,2-bis[4-[4-aminophenoxy]phenyl]hexafluoropropane. These can be used independently or as a mixture of a plurality of components, though the present invention is not limited to these examples.

It is preferable to use a mixed diamine comprising at least two aromatic diamines selected from the group consisting of 1,3-diaminobenzene, 1,3-bis(4-aminophenoxy)benzene, 3,4'-diaminodiphenyl ether, 4,4'-diaminodiphenyl ether, and 2,2'-bis(trifluoromethyl)benzidine. From the viewpoint of heat resistance and formability, it is particularly preferable to use a mixed diamine comprising a combination of 1,3-diaminobenzene and 1,3-bis(4-aminophenoxy)benzene; a mixed diamine comprising a combination of 3,4'-diaminodiphenyl ether and 4,4'-diaminodiphenyl ether; a mixed diamine comprising a combination of 3,4'-diaminodiphenyl ether and 1,3-bis(4-aminophenoxy)benzene; a mixed diamine comprising a combination of 4,4'-diaminodiphenyl ether and 1,3-bis(4-aminophenoxy)benzene; and a mixed diamine comprising a combination of 2,2'-bis(trifluoromethyl)benzidine and 1,3-bis(4-aminophenoxy)benzene.

In the present invention, an aromatic imide oligomer having an addition-reaction group at the end thereof is used. The aromatic imide oligomer preferably has a repeating unit of 0 to 20, particularly 1 to 5, and a number average molecular weight in terms of styrene by GPC of 10000 or less, especially 3000 or less. When the repetition number of the repeating unit is within the above-mentioned range, the melt viscosity is adjusted to an appropriate range, so that the short fibers can be uniformly mixed, and the short fiber-containing resin composition can be efficiently embedded in the gaps among the woven fibers. In addition to that, there is no necessity of shaping at a high temperature, and thus, it is possible to provide a laminate having excellent formability, and further having excellent heat resistance and mechanical strength.

The repetition number of the repeating unit can be adjusted by changing the ratio of the aromatic tetracarboxylic acid dianhydride, the aromatic diamine, and the compound having the anhydride group or the amino group together with the addition-reaction group in the molecule. By increasing the ratio of the compound having the anhydride group or the amino group together with the addition-reaction group in the molecule, the repetition number of the repeating unit is reduced due to the lowering molecular weight. When the ratio of the compound is decreased, the repetition number of the repeating unit is increased due to the rising molecular weight.

Resin additives such as flame retardants, colorants, lubricants, heat stabilizers, photo-stabilizers, ultraviolet absorbers, fillers and the like can be blended into the addition-reaction type polyimide resin according to known formulas depending on the intended use of the laminate.

[Short fibers]

It is desirable that the length (L) of the short fiber used in the present invention is shorter than the length of one side of one gap in the woven fibers (A and/or B), and it is in particular preferable that the length is in the range of 1 to 350 $\mu$m.

It is also possible to use any conventionally known functional fibers such as carbon fibers, aramid fibers, glass fibers, metallic fibers, graphite, PTFE, molybdenum disulfide, carbon nanotube, carbon black or the like for the short fibers similarly to the aforementioned woven fibers, and in particular, carbon fibers can be suitably used.

Among them, carbon fibers having an average fiber length of 200 $\mu$m or less and an average fiber diameter in the range of 5 to 18 $\mu$m can be used preferably, and in particular, mesophase type pitch-based carbon fibers can be suitably used. When the length exceeds the above range, the fibers cannot be provided efficiently in the gaps among the woven fibers. When the average fiber diameter is less than the above range, the handleability may be degraded and the cost may be increased. When the average fiber diameter exceeds the above range, the sedimentation speed of the functional fibers may be increased and the functional fibers tend to be unevenly distributed. In addition, the strength of the fibers tends to be lowered, so that the effect of a reinforcing material may be insufficient.

The content of the short fibers imposes a significant influence on the slidability of the laminate and warpage at the time of formation. In the present invention, it is preferable that the short fibers are contained in an amount of 5 to 200 parts by weight, especially 10 to 150 parts by weight relative to 100 parts by weight of the resin in order to obtain an article having excellent slidability and excellent shape stability free from warpage. When the content of the short fibers is less than the above range, the slidability may be degraded and the warpage of the laminate may be increased. When the content of the short fibers exceeds the above range, the slidability may be degraded as compared with the case where the content of the short fibers is in the above range, and excessive thickening may occur to inhibit shaping.

In the present invention, the short fiber-containing resin composition may further contain at least one of a fine carbon-based material such as graphite, PTFE, molybdenum disulfide and carbon black, and an inorganic material such as a metallic powder like aluminum powder and copper powder, together with the short fiber-containing resin composition. The inorganic material is preferably contained in an amount of 5 to 40 parts by weight, especially 5 to 30 parts by weight, relative to 100 parts by weight of the resin. When the amount of the inorganic material is less than the above range, the effect obtained by blending the inorganic material may be insufficient. When the amount of the inorganic material exceeds the range, the slidability may be impaired. For instance, the friction coefficient may be increased, or the wear resistance may be degraded.

(Method for producing laminate)

The laminate of the present invention can be produced in the following manner. Specifically, a short fiber-containing resin composition, which makes the outermost surface layer, is supplied to a die, and subsequently woven fibers are placed on the short fiber-containing resin composition, and furthermore the short fiber-containing resin composition is supplied on the woven fibers. After repeating the step of placing the woven fibers on the short fiber-containing resin composition and the step of supplying the short fiber-containing resin composition on the woven fibers at least once or several times corresponding to the number of the laminates, compression is conducted. Fig. 1 shows a laminate having seven layers in total, i.e., four layers of short fiber-containing resin composition and three layers of woven fibers. In this case, the short fiber-containing resin composition is supplied to the die, and then, the step of placing the woven fibers and the step of supplying the short fiber-containing resin composition are repeated three times, and after that, compression is conducted. Thereby, the short fiber-containing resin composition may be impregnated in the woven fibers. At the same time, the short fibers of the resin composition may easily enter the gaps in the woven fibers. By conducting compression in the lamination direction, the interlayer adhesion between the layer of short fiber-containing resin composition and the woven fibers can be improved and moreover, and short fibers can further enter the gaps in the woven fibers. As a result, the amount of short fibers present in the gaps can be increased.

In the method for producing a laminate of the present invention, first, a short fiber-containing resin composition to serve as the outermost surface is supplied to a die shaped to correspond to the shape of the article. Hereinafter, a method for producing a laminate having a layer of short fiber-containing resin composition comprising an addition-reaction type polyimide resin as a matrix is explained.

In the present invention, the addition-reaction type polyimide resin used as the matrix of the short fiber-containing resin composition has a low viscosity in the state of the prepolymer before crosslinking and curing. Therefore, in order to disperse uniformly the short fibers, the step of supplying the short fiber-containing resin composition to the die is preceded by the step of kneading the prepolymer of the addition-reaction type polyimide resin (imide oligomer) and the short fibers at a temperature not lower than the melting point and not higher than the heat-curing onset temperature of the addition-reaction type polyimide resin, so that the viscosity of the prepolymer is increased and the short fibers can be mixed preferably to be dispersed uniformly without sedimentation in the prepolymer. Since the short fibers are uniformly dispersed in the layer of short fiber-containing resin composition, a laminate free of warpage can be formed.

The prepolymer (imide oligomer) of the addition-reaction type polyimide resin and the short fibers are kneaded while heating at a temperature not lower than the melting point of the addition-reaction type polyimide resin so as to melt the prepolymer, whereby the prepolymer and the short fibers are mixed to prepare a short fiber-containing resin composition in a liquid state. In this case, it is preferable to use short fibers in an amount of 5 to 200 parts by weight, particularly 10 to 150 parts by weight, relative to 100 parts by weight of the addition-reaction type polyimide. The above-mentioned inorganic materials can also be blended in the above-mentioned amounts.

The prepolymer and the short fibers can be kneaded by using any conventionally known mixers such as a Henschel mixer, a tumbler mixer, and a ribbon blender. Among them, a batch type pressure kneader (kneader) is used particularly preferably since it is important to disperse the short fibers while preventing or decreasing breakage of the short fibers.

Next, the melt viscosity of the short fiber-containing resin composition is adjusted to a range of 10 to 5000 Pa·s under a temperature condition of 300 to 320°C. If the melt viscosity is less than 10 Pa·s, the melt viscosity is adjusted to the above range by holding the composition for 30 to 60 minutes at a temperature of 310+10°C, which is in the vicinity of the heat-curing onset temperature of the polyimide resin used in the composition.

That is, when the liquid short fiber-containing resin composition is held at a temperature of 310±10°C for 30 to 60 minutes by using an electric furnace or the like, the prepolymer gradually starts crosslinking, and thus, the viscosity rises. Furthermore, the increase in viscosity allows the short fibers blended in the prepolymer to maintain the dispersed state without sedimentation in the prepolymer. By setting the heating temperature and the holding time to the above ranges, only the viscosity can be raised in the above range without complete crosslink-curing of the prepolymer.

In the addition-reaction type polyimide resin, the reaction onset temperature relies on the addition-reaction group. A polyimide resin having a phenylethynyl group suitable as the addition-reaction group in the present invention is desirably heated at a temperature of 310±10°C for 30 to 60 minutes. This temperature indicates the vicinity of the heat-curing onset temperature.

The short fiber-containing resin composition having the melt viscosity adjusted to the above range is supplied to the die, the woven fibers are placed thereon, and the short fiber-containing resin composition is further supplied on the woven fibers. These steps are repeated to obtain a desired layer structure. After supplying a mixture of the short fiber-containing resin composition serving as the outermost surface, compression is conducted at a temperature not lower than the heat-curing onset temperature of the polyimide resin, thereby forming a desired laminate. By applying pressure on the short fiber-containing resin composition and the woven fibers by compression in this manner, the short fiber-containing resin composition is impregnated into the woven fibers. In particular, the gaps in the woven fibers are filled with the short fiber-containing resin composition so that the interlayer adhesion between the short fiber-containing resin composition and the woven fibers can be improved. Furthermore, as described above, the wear resistance can be exhibited over a long period of time.

From the viewpoint of productivity or the like, it is preferable to adjust melting viscosity of the short fiber-containing resin composition before supplying the short fiber-containing resin composition to the die as described above. In the meantime, even a solid prepared by cooling and solidifying the short fiber-containing resin composition can be formed similarly by using an electric furnace or the like to heat and melt at a temperature not lower than the melting point of the addition-reaction type polyimide resin. It is also possible to form a laminate by supplying a solid material to a die, melting the solid material in the die, and then by placing the woven fibers to cure by heating together.

In a case of using a thermoplastic resin like an engineering plastic as the matrix of the short fiber-containing resin composition, the resin is heated to a temperature not lower than the melting point of the thermoplastic resin to make the resin in a molten state. The molten resin is supplied to a die, on which the woven fibers are placed in the aforementioned manner, and the molten thermoplastic resin is further supplied on the woven fibers. The thermoplastic resin and the woven fibers are compressed and cooled to solidify, thereby forming a laminate.

Examples:

[Wear resistance]

A sliding wear test was conducted using a thrust-type wear testing machine (friction and wear tester EFM-III-F manufactured by A&D Corporation) conforming to JIS K 7218 (sliding wear testing method of plastics), by a ring-on-disk method as shown in Fig. 4. The conditions were as follows. The load (W) was 300 N, the rate was 0.5 m/s, the sliding distance (L) was 3 km (test time: 100 minutes), and the mating material was S45C (surface roughness Ra = 0.8 $\mu$m). The wear amount (volume V) was measured from the shape of the grooves on the test piece by using a three-dimensional contour shape measuring instrument (SURFCOM2000SD3 manufactured by TOKYO SEIMITSU CO., LTD.), from which the specific wear amount Ws was calculated based on the following formula (1).

$$Ws\,[mm^3/N{\cdot}m] \;=\; V/WL \quad {\cdots}(1)$$

[Bending strength]

Referring to JIS K 7171 (Plastics - Determination of flexural properties), a bending test was conducted using an autograph (AG-I/50N-10kN manufactured by Shimadzu Corporation) under the test conditions of 50 mm in length, 10 mm in width and 3 to 5 mm in thickness, thereby measuring a bending stress.

[Charpy impact strength]

Referring to JIS K 7077 (Testing method for Charpy impact strength of carbon fiber-reinforced plastics) and JIS K 7111-1 (Plastics - Determination of Charpy impact properties), a Charpy impact test was conducted using a digital impact tester (DG-UB model manufactured by Toyo Seiki Seisaku-sho Ltd.). The measurement conditions were as follows. The percussion direction was flatwise, and the nominal pendulum energy was 0.5 J, 4 J and 15 J. The test piece size was 80 mm in length, 10 mm in width, and 3 to 6 mm in thickness. In this manner, Charpy impact strength was measured.

(Example 1)

43 parts by weight of pitch-based carbon fiber (K223HM manufactured by Mitsubishi Chemical Corporation) having an average fiber length of 200 $\mu$m was blended in 100 parts by weight of addition-polymerization type polyimide (PETI-330 manufactured by Ube Industries, Ltd.), and the mixture was melted in an electric furnace at 280°C for 30 minutes at atmospheric pressure. The mixture was then cooled to room temperature, whereby a short fiber-containing resin composition was obtained. The thus obtained short fiber-containing resin composition was pulverized to a size easy to handle, and supplied to a die. After that, a set of steps of placing the woven fibers (200-mesh carbon cloth) and supplying the short fiber-containing resin composition was repeated three times. The die was heated to 280°C and held for 10 minutes. Later, the temperature was raised to 320°C at a rate of 3°C/min and kept for 30 minutes to adjust the viscosity. Later, the temperature was further raised to 371°C at a rate of 4.3°C/min while pressurizing to 3 MPa and kept for 60 minutes. By annealing, a plate having a diameter of 200 mm and a thickness of 4 mm was obtained. The thus obtained plate was processed into a desired size to provide a test piece.

(Example 2)

A test piece was provided in the same manner as Example 1 except that the carbon fiber to be used for the short fiber-containing resin composition was replaced by a pitch-based carbon fiber having an average fiber length of 10 $\mu$m. This pitch-based carbon fiber was obtained by pulverizing the pitch-based carbon fiber that was used in Example 1 and that had an average fiber length of 200 $\mu$m.

(Comparative Example 1)

43 parts by weight of pitch-based carbon fiber (K223HM manufactured by Mitsubishi Chemical Corporation) having an average fiber length of 200 $\mu$m was blended in 100 parts by weight of addition-polymerization type polyimide (PETI-330 manufactured by Ube Industries, Ltd.), and the mixture was melted in an electric furnace at 280°C for 30 minutes at atmospheric pressure. The mixture was then cooled to room temperature, whereby a short fiber-containing resin composition was obtained. The thus obtained short fiber-containing resin composition was pulverized to a size easy to handle, and supplied to a die heated to 280°C and held for 10 minutes. Later, the temperature was raised to 320°C and kept for 30 minutes to adjust the viscosity. Then, the temperature was further raised to 371°C at a rate of 4.3°C/min while pressurizing to 3 MPa and kept for 60 minutes. By annealing, a plate having a diameter of 200 mm and a thickness of 3 mm was obtained. The thus obtained plate was processed into a desired size to provide a test piece.

(Comparative Example 2)

A test piece was provided in the same manner as Comparative Example 1 except that the carbon fiber to be used for the short fiber-containing resin composition was replaced by a pitch-based carbon fiber having an average fiber length of 10 $\mu$m. This pitch-based carbon fiber was obtained by pulverizing the pitch-based carbon fiber that was used in Comparative Example 1 and that had an average fiber length of 200 $\mu$m.

(Comparative Example 3)

Twelve sheets of woven carbon fibers (200-mesh carbon cloth) were supplied to the die heated at 280°C so that the total thickness would be 3 mm. Then, 100 parts by weight of addition-polymerization type polyimide (PETI-330 manufactured by Ube Industries, Ltd.) was supplied relative to 100 parts by weight of the woven carbon fibers, and held for 10 minutes to melt. Later, the temperature was raised to 320°C at a rate of 3°C/min and kept for 30 minutes to adjust the viscosity. Then, the temperature was further raised to 371°C at a rate of 4.3°C/min while pressurizing to 3 MPa. This was kept for 60 minutes, then annealed to provide a plate having a diameter of 200 mm and a thickness of 3 mm. The thus obtained plate was processed to have a desired size to provide a test piece.

The specific wear amount, the bending strength and the Charpy impact strength of the articles obtained in Examples 1, 2 and Comparative Examples 1 to 3 are shown in Table 1.

[Table 1]

| | Short fiber average fiber length [$\mu$m] | Short fiber part by weight | The number of sheets of woven fibers | Woven fiber mesh size | Specific wear amount [x10$^{-5}$mm$^3$/N·m] | Bending strength [MPa] | Charpy impact strength [kJ/m$^2$] |
|---|---|---|---|---|---|---|---|
| Ex. 1 | 200 | 43 | 3 | #200 | 0.24 | 502.9 | 54.6 |
| Ex. 2 | 10 | 43 | 3 | #200 | 0.19 | 198.2 | 2.8 |
| Com. Ex. 1 | 200 | 43 | 0 | - | 0.22 | 104.6 | 10.3 |
| Com. Ex. 2 | 10 | 43 | 0 | - | 0.34 | 98.2 | 8.5 |
| Com. Ex. 3 | - | - | 12 | #200 | 0.37 | 408.7 | 70.2 |
| Note Ex.: Example Com.Ex.: Comparative Example | | | | | | | |

[Industrial Applicability]

The resin article of the present invention is excellent in mechanical strength and wear resistance, and thus, it can be used in various applications as a sliding member in automobiles, electric or electronic appliances and the like.

**Claims**

1. A laminate having at least a layer of woven fibers formed of fiber bundles that cross each other and a layer of short fiber-containing resin composition that contains short fibers, the short fiber-containing resin composition being present in gaps among the fiber bundles.

2. The laminate according to claim 1, wherein the short fibers have a length shorter than each side of the gaps.

3. The laminate according to claim 1 or 2, wherein the length of the short fibers is in a range of 1 to 350 $\mu$m.

4. The laminate according to any one of claims 1 to 3, wherein the short fiber-containing resin composition includes an addition-reaction type polyimide resin in which the short fibers are dispersed.

5. The laminate according to any one of claims 1 to 4, wherein the woven fibers and the short fibers are formed of carbon fibers.

6. The laminate according to any one of claims 1 to 5, wherein the layer of short fiber-containing resin composition and the layer of woven fibers are laminated alternately.

7. A method for producing the laminate according to any one of claims 1 to 6, including:

   supplying the short fiber-containing resin composition to a die;
   repeating at least once a step of placing woven fibers on the short fiber-containing resin composition and a step of supplying the short fiber-containing resin composition on the woven fibers; and
   conducting compression.

8. The method according to claim 7, wherein the short fiber-containing resin composition includes the addition-reaction type polyimide resin in which the short fibers are dispersed, and a compression is conducted at a temperature not lower than the heat-curing temperature of the addition-reaction type polyimide resin.

# Fig. 1

# Fig. 2

Fig. 3

Fig. 4

MATING MATERIAL
(FIXED HOLLOW CYLINDER)

TEST LOAD

SLIDING SURFACE
PRESSURE P

TEST PIECE
(FIXED)

VELOCITY V

## INTERNATIONAL SEARCH REPORT

| International application No. |
|---|
| PCT/JP2018/043570 |

**A. CLASSIFICATION OF SUBJECT MATTER**
Int.Cl. B32B5/28(2006.01)i, B29C43/20(2006.01)i, B29C43/34(2006.01)i, C08J5/04(2006.01)i, C08K7/06(2006.01)i, C08L79/08(2006.01)i

According to International Patent Classification (IPC) or to both national classification and IPC

**B. FIELDS SEARCHED**

Minimum documentation searched (classification system followed by classification symbols)
Int.Cl. B32B1/00-43/00, B29C43/00-43/34, B29C41/00-41/46, B29C70/00-70/88, C08J5/04-5/10, C08J5/24, B29B11/16, B29B15/08-15/14, C08K3/00-13/08, C08L1/00-101/14

Documentation searched other than minimum documentation to the extent that such documents are included in the fields searched
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-168221 A (MITSUBISHI ELECTRIC CORP.) 28 September 2015, claims 1, 2, 4, paragraphs [0007], [0021], [0029], [0039]-[0042], examples 1-2 (Family: none) | 1-8 |
| X | JP 9-239847 A (NISSAN MOTOR CO., LTD.) 16 September 1997, claim 1, paragraphs [0001], [0041]-[0042], example 1 (Family: none) | 1-2, 5 |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22 February 2019 (22.02.2019) | 05 March 2019 (05.03.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/043570

C (Continuation). DOCUMENTS CONSIDERED TO BE RELEVANT

| Category* | Citation of document, with indication, where appropriate, of the relevant passages | Relevant to claim No. |
|---|---|---|
| X | JP 58-117226 A (MATSUSHITA ELECTRIC WORKS, LTD.) 12 July 1983, claims 1, 3, page 1, lower left column, line 19 to lower right column, line 2, page 2, lower left column, line 14 to lower right column, line 1, examples 1-2 (Family: none) | 1-3, 6 |
| X | JP 64-62331 A (KOBE STEEL, LTD.) 08 March 1989, claim 1, page 1, lower right column, lines 3-7, page 2, lower left column, line 6, page 4, lower left column, line 16 to page 5, upper left column, line 2, example 1 (Family: none) | 1, 6 |
| A | JP 2004-315578 A (NICHIAS CORP.) 11 November 2004, paragraph [0022] (Family: none) | 1-8 |
| A | JP 56-115216 A (HITACHI CHEMICAL INDUSTRY CO., LTD.) 10 September 1981, claims (Family: none) | 1-8 |
| A | JP 2013-173334 A (IBARAKI KOGYO KK) 05 September 2013, claim 1 (Family: none) | 1-8 |
| A | JP 9-46082 A (TORAY INDUSTRIES, INC.) 14 February 1997, claims 1-3 (Family: none) | 1-8 |
| A | JP 5-147146 A (NITTO BOSEKI CO., LTD.) 15 June 1993, claims, examples & US 5560985 A & EP 507322 A2, claims, examples | 1-8 |

Form PCT/ISA/210 (continuation of second sheet) (January 2015)

14

**REFERENCES CITED IN THE DESCRIPTION**

**Patent documents cited in the description**

- JP 4538502 B
- JP 2009242656 A
- JP 2016060914 A